# EUROPÄISCHE PATENTSCHRIFT

(11) **EP 0 921 023 B1**
(45) Veröffentlichungstag und Bekanntmachung des Hinweises auf die Patenterteilung: **19.05.2004**
(21) Anmeldenummer: 98119559.7
(22) Anmeldetag: 16.10.1998
(51) Int. Cl.: B60J 7/12

(54) **Faltverdeck für ein Fahrzeug, insbesondere Personenkraftwagen**
Foldable top for vehicle, particularly for passenger vehicle
Toit pliant pour véhicule,en particulier pour véhicule à passagers

(30) Priorität: 06.12.1997 DE 19754189
(43) Veröffentlichungstag der Anmeldung: 09.06.1999
(73) Patentinhaber: Dr.Ing. h.c.F. Porsche Aktiengesellschaft, 70435 Stuttgart (DE)
(72) Erfinder: Aydt, Matthias, 71735 Eberdingen (DE); Blech, Christof, 71272 Renningen (DE)

(56) Entgegenhaltungen:
- EP-A- 0 806 313
- DE-C- 19 622 953

## Beschreibung

Die Erfindung bezieht sich auf ein Faltverdeck für ein Fahrzeug, insbesondere Personenkraftwagen, gemäß dem Oberbegriff des Patentanspruchs 1.

Aus der gattungsgemäßen DE 196 22 953 C1 geht ein Faltverdeck für ein Fahrzeug, insbesondere Personenkraftwagen, mit einem an aufbauseitigen Verdecklagern schwenkbar gelagerten Verdeckgestell und einem Verdeckbezug hervor, wobei das Verdeckgestell einen Hauptspriegel, einen Eckspriegel, einen heckseitigen Spannbügel und einen an beiden Längsseiten von je einer Viergelenkanordnung getragenen vorderen Verdeckabschnitt umfaßt. Bei dieser Verdeckkinematik bilden die beiden Lenker für den vorderen Verdeckabschnitt ein vorderes Viergelenk und der Hauptspriegel, der heckseitige Spannbügel und ein Steuerlenker ein hinteres Viergelenk, das an beiden Längsseiten des Faltverdecks über eine Schubstange mit dem vorderen Viergelenk und dem Eckspriegel verbunden ist.

Aufgabe der Erfindung ist es, ein Faltverdeck der eingangs genannten Gattung so weiterzubilden, daß bei vereinfachtem Aufbau der Verdeckkinematik insbesondere beim Öffnungsvorgang des Faltverdecks eine koordinierte Bewegung des Hauptspriegels und des vorgelagerten Lenkers erfolgt und das Verdeckgestänge in der Schließstellung des Faltverdecks zusätzlich versteift wird.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Anordnung einer Stelleinrichtung zwischen dem Hauptspriegel und dem vorgelagerten Lenker des Verdeckgestells bei einem lediglich stoffgesteuerten Hauptspriegel ein koordinierter Bewegungsablauf des Verdeckgestells beim Öffnungs- und Schließvorgang des Faltverdecks sichergestellt ist und daß das Verdeckgestell in Schließstellung des Faltverdecks durch die Stelleinrichtung zusätzlich ausgesteift bzw. stabilisiert wird. Die aus einer Anlauframpe und einem Anlaufkeil gebildete Stelleinrichtung weist einen einfachen Aufbau auf und ist kostengünstig herstellbar.

Die Anlauframpe ist vorzugsweise in den Dachrahmenabschnitt des Lenkers integriert. Durch die Stelleinrichtung erfolgt in Schließstellung des Faltverdecks ein definierter Formschluß zwischen dem Hauptspriegel und dem angrenzenden Lenker in X-, Y- und Z-Richtung. Zudem ist durch die Stelleinrichtung eine definierte Endlage des stoffgesteuerten Hauptspriegels gegeben. Durch die Stelleinrichtung ist ferner ein einwandfreier Ein- bzw. Auslauf des seitlichen Randes des Verdeckbezugs in korrepondierende Aufnahmen der Dachrahmenabschnitte gewährleistet. Dadurch, daß der Hauptspriegel, der Eckspriegel und der Spannbügel lediglich stoffgesteuert sind, weist die Verdeckkinematik einen äußerst einfachen, kostengünstigen Aufbau auf. Beim Öffnungsvorgang des Faltverdecks werden ab einer Umkehrstellung des Hauptspriegels die Gewichtskräfte von Hauptspriegel, Eckspriegel und Spannbügel zur Verstellbewegung des Faltverdecks genutzt.

Ein Ausführungsbeispiel der Erfindung ist in der Zeichnung dargestellt und wird im folgenden näher erläutert.

Es zeigen
- Fig. 1: eine perspektivische Teilansicht von schräg hinten auf die linke Hälfte eines Fahrzeuges mit einem Faltverdeck in geschlossener Stellung,

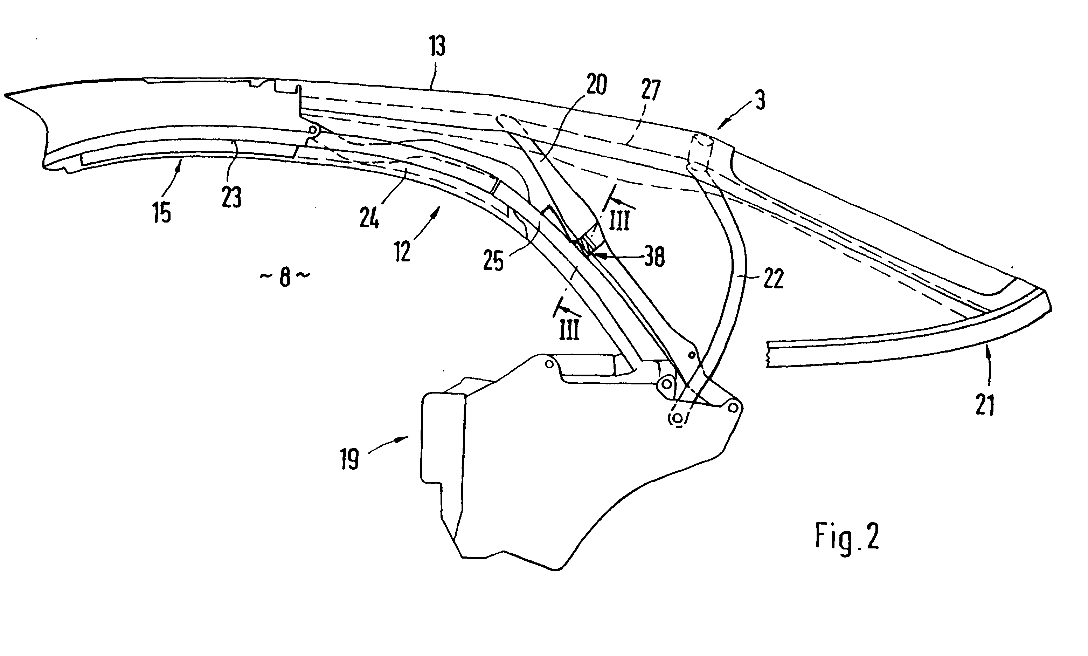

- Fig. 2: eine Teilseitenansicht des Faltverdecks in Schließstellung mit der Stelleinrichtung zwischen Hauptspriegel und vorgelagertem Lenker,
- Fig. 3: einen Schnitt nach der Linie III-III der Fig. 2 in größerer Darstellung,
- Fig. 4: eine Teilseitenansicht des Faltverdecks in einer Zwischenstellung, wobei der Hauptspriegel gerade seine Umkehrstellung (Totpunktlage) einnimmt und

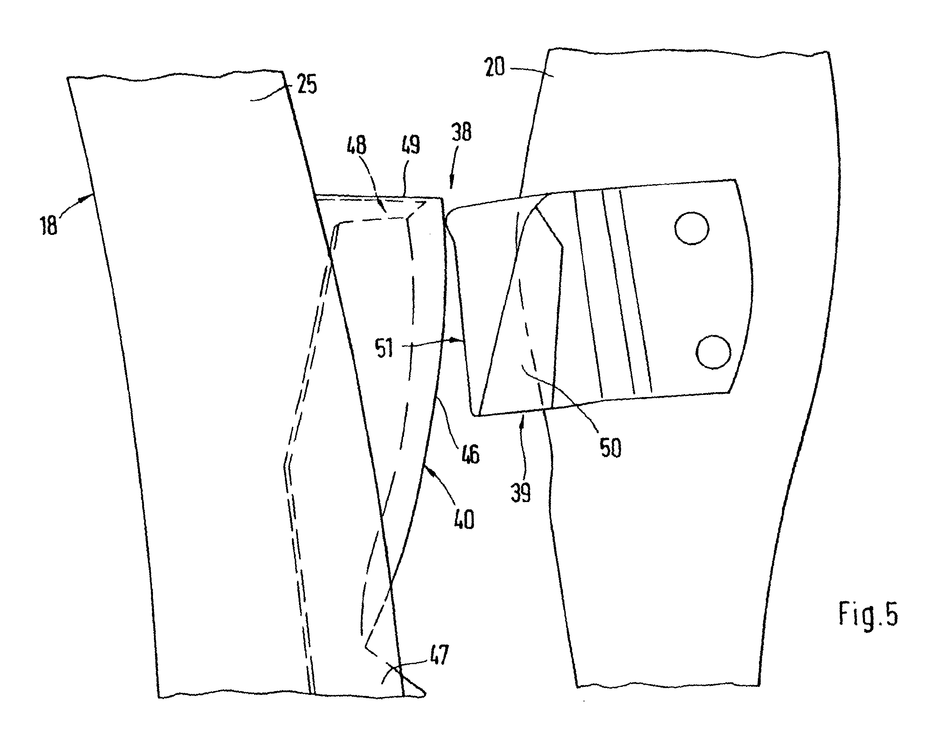

- Fig. 5: eine Einzelheit X der Fig. 4 in größerer Darstellung.

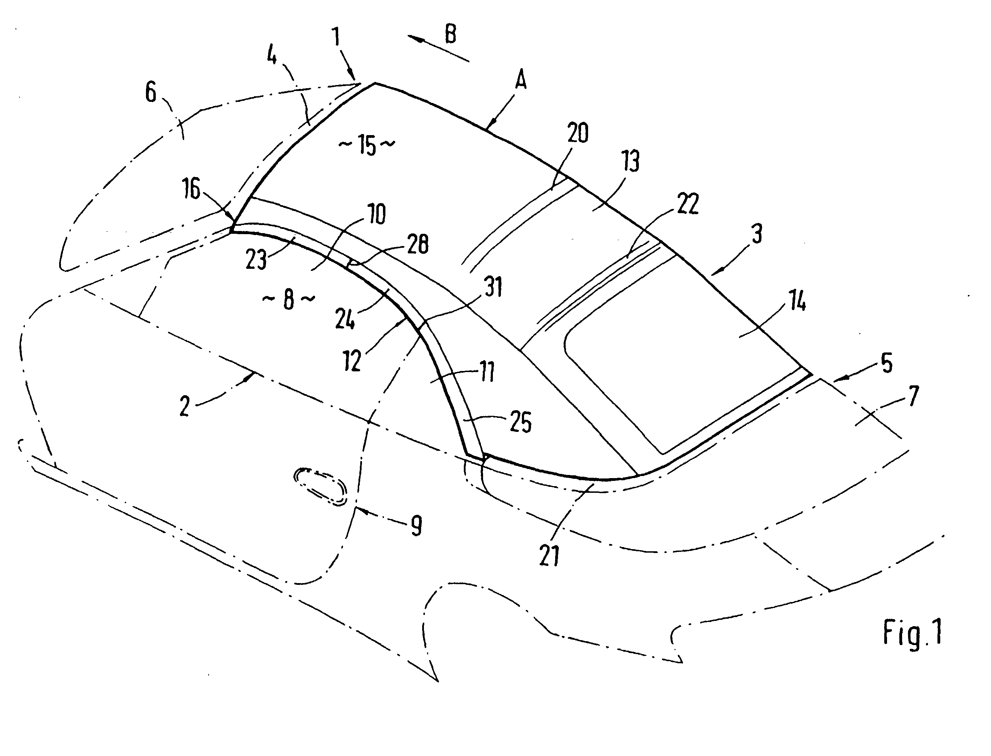

Fig. 1 zeigt einen Teilbereich eines Personenkraftwagens 1, der oberhalb einer Gürtellinie 2 ein Faltverdeck 3 aufweist. Das Faltverdeck 3 erstreckt sich in einer Schließstellung A zwischen einem Windschutzscheibenrahmen 4 und einem Heckbereich 5 und ist über wenigstens einen nicht näher gezeigten Verschluß am Windschutzscheibenrahmen 4 lösbar in Lage gehalten. Der Windschutzscheibenrahmen 4 nimmt eine Windschutzscheibe 6 auf. Im Heckbereich 5 ist ein schwenkbarer Verdeckkastendeckel 7 dargestellt, der einen darunterliegenden Verdeckkasten zumindest teilweise abdeckt. In der zurückgeklappten heckseitigen Ablagestellung ist das Faltverdeck 3 versenkt im Verdeckkasten angeordnet. Ein Fahrgastraum 8 des im Ausführungsbeispiel 2 + 2-sitzig ausgebildeten Personenkraftwagens 1 ist durch seitliche Türen 9 zugänglich, wobei die Türen 9 oberhalb der Gürtellinie 2 rahmenlos ausgebildete Türfensterscheiben 10 aufweisen. An die Türfensterscheiben 10 grenzen nach hinten hin versenkbar ausgebildete Fondseitenscheiben 11 an.

Das Faltverdeck 3 setzt sich aus einem Verdeckgestell 12 und einem örtlich am Verdeckgestell 12 in Lage gehaltenen elastischen Verdeckbezug 13 zusammen. Im hinteren Bereich des Verdeckbezuges 13 ist eine Sichtscheibe 14 vorgesehen, die durch eine flexible oder starre Heckscheibe gebildet wird.

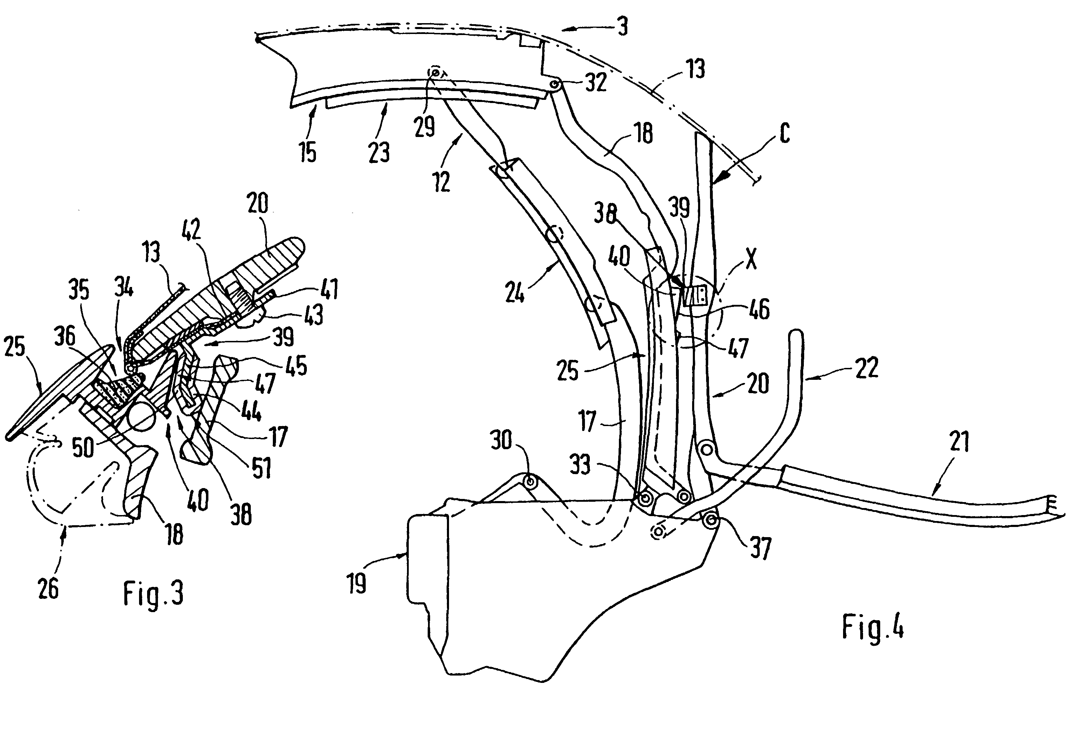

Das Verdeckgestell 12 umfaßt im wesentlichen einen benachbart dem Windschutzscheibenrahmen 4 angeordneten, großflächig ausgebildeten formsteifen Verdeckabschnitt 15, der an seinen beiden seitlich außenliegenden Längsseiten 16 jeweils über zwei ein Viergelenk bildende Lenker 17, 18 an einem aufbauseitig angebrachten Verdecklager 19 schwenkbar gelagert ist (Fig. 4).

Ferner umfaßt das Verdeckgestell 12 einen an den beiden Verdecklagern 19 schwenkbar gelagerten Hauptspriegel 20, einen mit dem Hauptspriegel 20 gelenkig verbundenen heckseitigen Spannbügel 21 und einen Eckspriegel 22. Der Eckspriegel 22 ist ebenfalls an den beiden Verdecklagern 19 schwenkbar gelagert. Der Eckspriegel 22, der heckseitige Spannbügel 21 und der Hauptspriegel 20 sind kinematisch von den Lenkern 17, 18 des vorderen Verdeckabschnitts 15 entkoppelt und werden nur über die Stoffbefestigung des Verdeckbezuges 13 gesteuert. Hierzu sind an der Innenseite des Verdeckbezuges 13 längsgerichtete Spanngurte 27 vorgesehen, die den Hauptspriegel 20, den Eckspriegel 22 und den heckseitigen Spannbügel 21 mit dem vorderen Verdeckabschnitt 15 verbinden und in Schließstellung A des Faltverdecks 3 den Verdeckbezug spannen.

An beiden Längsseiten 16 des Personenkraftwagens 1 sind am formsteifen Verdeckabschnitt 15 und an den beiden Lenkern 17, 18 jeweils Dachrahmenabschnitte 23, 24, 25 ausgebildet, an denen der Verdeckbezug 13 und mit der Türfensterscheibe 10 bzw. der Fondseitenscheibe 11 zusammenwirkende Dichtkörper festlegbar sind. In Fig. 3 ist der Dichtkörper 26 für den Dachrahmenabschnitt 25 dargestellt.

In Schließstellung A des Faltverdecks 3 bilden die außenhautbündig aneinandergesetzten Dachrahmenabschnitte 23, 24, 25 einen dreiteiligen seitlichen Dachrahmen. Die beiden in Schließstellung A des Faltverdecks 3 vorderen Dachrahmenabschnitte 23 sind einstückig mit dem vorderen formsteifen Verdeckabschnitt 15 ausgebildet und wie dieser aus einer Leichtmetallegierung (Magnesiumlegierung) im Gießverfahren hergestellt.

Die vorderen Dachrahmenabschnitte 23 erstrecken sich im wesentlichen über die gesamte Längserstreckung des formsteifen Verdeckabschnitts 15.

Der - in Fahrtrichtung B gesehen - am vorderen Lenker 17 vorgesehene Dachrahmenabschnitt 24 ist derart angeordnet, daß er in Schließstellung A des Faltverdecks 3 unter Bildung einer schmalen ersten Fuge 28 an den hinteren Rand des vorderen Dachrahmenabschnitts 23 - fluchtend mit diesem - anschließt. Die Fuge 28 erstreckt sich in aufrechter Richtung und verläuft schräg nach hinten oben.

Der vordere Lenker 17 ist mit seinem einen Ende bei 29 gelenkig mit dem formsteifen Verdeckabschnitt 15 und mit seinem anderen Ende bei 30 mit dem Verdecklager 19 verbunden. Der einen mittleren Teil des seitlichen Dachrahmens bildende Dachrahmenabschnitt 24 wird durch ein Gußteil aus einer Leichtmetallegierung gebildet und ist einstellbar am Lenker 17 befestigt.

Der - in Fahrtrichtung B gesehen - am hinteren Lenker 18 vorgesehene Dachrahmenabschnitt 25 ist derart angeordnet, daß er sich in Schließstellung A des Faltverdecks 3 unter Bildung einer schmalen zweiten Fuge 31 an das hintere Ende des Dachrahmenabschnitts 24 des vorderen Lenkers 17 - fluchtend zu diesem - anschließt. Auch der hintere Dachrahmenabschnitt 25 wird durch ein separates, im Gießverfahren hergestelltes Teil aus einer Leichtmetallegierung gebildet, das lösbar und gegebenenfalls einstellbar mit dem Lenker 18 verbunden ist.

Der hintere Lenker 18 ist mit seinem einen Ende bei 32 an den hinteren Rand des formsteifen Verdeckabschnitts 15 und mit seinem anderen Ende bei 33 drehbar an das Verdecklager 19 angeschlossen. Die Enden 29, 30, 32 und 33 bilden auf jeder Längsseite des Faltverdecks 3 ein Gelenkviereck.

Der Verdeckbezug 13 ragt in Schließstellung A des Faltverdecks 3 hinter dem formsteifen Verdeckabschnitt 15 mit einem Randbereich 34 in eine rinnenförmige Aufnahme 35 der Dachrahmenabschnitte 24, 25 hinein, wobei die Aufnahmen 35 jeweils an der Oberseite der Dachrahmenabschnitte 24, 25 ausgebildet sind. Innerhalb jeder Aufnahme 35 ist ein Dichtkörper 36 angeordnet (Fig. 3).

Der Hauptspriegel 20 ist um eine querverlaufende, etwa horizontale Drehachse 37 an beiden gegenüberliegenden aufbauseitigen Verdecklagern 19 schwenkbar gelagert und lediglich über ein oder mehrere längsgerichtete Spannbänder 27 mit dem vorgelagerten formsteifen Verdeckbereich 15 verbunden. Aufgrund der mit Abstand zueinander angeordneten Drehachsen 33 und 37 von Hauptspriegel 20 und Lenker 18 beschreiben diese beim Öffnungs- und Schließvorgang des Faltverdecks 3 - insbesondere in Fahrzeugquerrichtung - unterschiedliche sich überkreuzende Bewegungsbahnen. Damit vor allem beim Öffnungsvorgang des Faltverdecks 3 die Bewegungen von Hauptspriegel 20 und Lenker 18 koordiniert ablaufen und kein gegenseitiges Verspannen von Hauptspriegel 20 und Lenker 18 stattfinden kann, ist erfindungsgemäß zwischen dem Hauptspriegel 20 und dem vorgelagerten Lenker 18 auf zumindest einer Längsseite des Faltverdecks 3 eine Stelleinrichtung 38 vorgesehen, wobei durch diese Stelleinrichtung 38 in Schließstellung A des Faltverdecks 3 ein definierter Formschluß zwischen dem Hauptspriegel 20 und dem Lenker 18 erfolgt. Vorzugsweise ist die Stelleinrichtung 38 an beiden Längsseiten 16 des Verdeckgestells 12 vorgesehen. Jede Stelleinrichtung 38 umfaßt einen vorstehenden Anlaufkeil 39, der beim Öffnungs- und Schließvorgang des Faltverdecks 3 - zumindest zeitweise - mit einer zugeordneten Anlauframpe 40 zusammenwirkt.

Im Ausführungsbeispiel ist der Anlaufkeil 39 am Hauptspriegel 20 vorgesehen und zwar auf der dem vorgelagerten Lenker 18 zugekehrten Seite. Der Anlaufkeil 39 steht gegenüber dem Hauptspriegel 20 bereichsweise etwas vor. Gemäß Fig. 3 umfaßt der Anlaufkeil 39 ein abgewinkeltes Trägerblech 41, dessen einer, nicht umhüllter Schenkel 42 mittels Schrauben 43 am Hauptspriegel 20 festlegbar ist. Der andere, mit einer Umhüllung 44 aus geeignetem Kunststoff, Gummi oder dergleichen versehene Schenkel 45 wirkt mit der vorgelagerten Anlauframpe 40 zusammen. Die Anlauframpe 40 ist am Lenker 18 angeordnet und zwar auf der dem Anlaufkeil 39 zugewandten Seite des Lenkers 18. Vorzugsweise ist die Anlauframpe 40 einstückig mit dem am hinteren Lenker 18 befestigten Dachrahmenabschnitt 25 ausgebildet. Sie könnte jedoch auch durch ein separates Teil gebildet werden, das am Lenker 8 befestigbar ist. Die Anlauframpe 40 ist einem oberen Bereich des Dachrahmenabschnitts 25 vorgesehen und setzt sich aus einer bogenförmigen Führungsbahn 46 und einer am unteren Rand der Führungsbahn 46 angeordneten schrägverlaufenden Stützwand 47 zusammen. Die Führungsbahn 46 bildet die Oberseite einer etwa U-förmigen, nach unten hin offenen Anformung 48 des Dachrahmenabschnitts 25, wobei der außenliegende längere Schenkel 49 der Anformung 48 einstückig mit dem Dachrahmenabschnitt 25 verbunden ist. Die schrägverlaufende Stützwand 47 ist von oben auf die Führungsbahn 46 aufgesetzt. In Schließstellung A des Faltverdecks 3 liegt eine schrägverlaufende Abstützfläche 50 des Anlaufkeils 39 an der Innenseite der Stützwand 47 an, wodurch eine Fixierung in X-, Y- und Z-Richtung zwischen Hauptspriegel 20 und hinterem Lenker 18 vorliegt und sich der Lenker 18 somit nicht nach innen bewegen kann. Dadurch wird das Verdeckgestell 12 in Schließstellung A zusätzlich versteift. Zudem liegt die Innenseite des Anlaufkeils 39 in Schließstellung A des Faltverdecks 3 am weiter innenliegenden Lenker 17 örtlich an, wodurch eine weitere Aussteifung des Verdeckgestells 12 erfolgt.

Beim Öffnen des Faltverdecks 3 bewegt sich die schrägverlaufende Abstützfläche 50 des Anlaufkeils 39 von der Stützwand 47 der Anlauframpe 40 weg und die ballige Unterseite 51 des Anlaufkeils 39 gerät in Kontakt mit der Führungsbahn 46 der Anlauframpe 40. Beim Bewegen des angetriebenen Lenkers 18 des Verdeckgestells 12 wird somit der dahinterliegende Hauptspriegel 20 zwangsweise nach hinten bewegt. Der Kontakt zwischen Anlauframpe 40 und Anlaufkeil 39 erfolgt etwa so lange, bis der Hauptspriegel 20 eine etwa vertikale Umkehrstellung C (Totpunktlage) einnimmt (Fig. 4). Danach ziehen die Gewichtskräfte des Eckspriegels 22 und des Spannbügels 21 über die Spanngurte 27 den Hauptspriegel 20 nach hinten in die heckseitige Ablagestellung. Die nach unten hin offene Anformung 48 nimmt unterhalb der Führungsbahn 46 ein nicht näher dargestelles Kabel auf, wobei in Fortsetzung der Anlauframpe 40 am Dachrahmenabschnitt 25 weitere Aufnahmeabschnitte für dieses Kabel vorgesehen sind.

Durch die zwischen Hauptspriegel 20 und Lenker 18 vorgesehene Stelleinrichtung 38 nehmen die Dachrahmenabschnitte 24, 25 der Lenker 17, 18 in Schließstellung A des Faltverdecks 3 eine definierte Stellung in Y-Richtung ein, so daß das randseitige Ein- und Ausfahren des Verdeckbezugs 13 in die korrespondierenden Aufnahmen 35 beim Öffnen und Schließen des Faltverdecks 3 sicher gewährleistet ist.

Beim Öffnungsvorgang wird bei Betätigung des Verdeckviergelenks der Hauptspriegel 20 durch den definierten Formschluß zwischen Anlauframpe 40 und Anlaufkeil 39 über den Drehpunkt 37 am Verdecklager 19 nach hinten verschwenkt. Dieser definierte Formschluß wird genutzt, um die relative Y-Bewegung zwischen dem Hauptspriegel 20 und dem vorgelagerten Lenker 18 gezielt zu steuern. Nur so ist gewährleistet, daß der am Hauptspriegel 20 befestigte Verdeckbezug 13 definiert aus den Aufnahmen 35 der Dachrahmenabschnitte 24, 25 herauslaufen kann. Dieser Formabschluß ist so lange in Funktion, bis die Umkehrstellung (Totpunktlage) des Hauptspriegels 20 erreicht ist. Danach ziehen die Gewichtskräfte des Eckspriegels 22 und des Spannbügels 21, die über Spanngurte 27 mit dem Hauptspriegel 20 verbunden sind, den Hauptspriegel 20 nach hinten.

Beim Schließvorgang wird zunächst der Hauptspriegel 20 durch die Spanngurte 27 und den Verdeckbezug 13 nach oben geführt, bis der Anlaufkeil 39 in der Umkehrstellung des Hauptspriegels 20 an der Anlauframpe 40 des vorgelagerten Lenkers 18 zur Anlage kommt. Dieses Gleichgewicht ist möglich, da der Eckspriegel 22 und der Spannbügel 21 durch die Spanngurte 27 und den Verdeckbezug 13 mit dem Hauptspriegel 20 verbunden sind und diese durch ihre Gewichtskraft diesem entgegen wirken.

Der definierte Formschluß wird genutzt, um die relative Y-Bewegung zwischen Hauptspriegel 20 und vorgelagertem Lenker 18 gezielt zu steuern. Nur so ist gewährleistet, daß der am Hauptspriegel 20 befestigte Verdeckbezug 13 definiert einlaufen kann.

## Patentansprüche

1. Faltverdeck (3) für ein Fahrzeug insbesondere Personenkraftwagen, mit einem an aufbauseitigen Verdecklagern (19) schwenkbar gelagerten Verdeckgestell (12) und einem Verdeckbezug (13), wobei das Verdeckgestell einen Hauptspriegel (20) und zumindest einen einen vorderen Verdeckabschnitt mit dem Verdecktager (19) verbindenden Lenker (17,18) umfaßt, **dadurch gekennzeichnet, daß** zwischen dem lediglich stoffgesteuerten Hauptspriegel (20) und dem vorgelagerten Lenker (18) zumindest eine beim Öffnen des Faltverdecks (3) wirksame Stelleinrichtung (38) vorgesehen ist, wobei durch die Stelleinrichtung (38) in Schließstellung (A) des Faltverdecks (3) ein definierter Formschluß zwischen dem Hauptspriegel (20) und dem Lenker (18) erfolgt.

2. Faltverdeck nach Anspruch 1, **dadurch gekennzeichnet, daß** an beiden Längsseiten (16) des Verdeckgestells (12) jeweils eine Stelleinrichtung (38) vorgesehen ist.

3. Faltverdeck nach den Ansprüchen 1 und 2, **dadurch gekennzeichnet, daß** jede Stelleinrichtung (38) einen Anlaufkeil (39) umfaßt, der beim Öffnungs- und Schließvorgang des Faltverdecks (3) mit einer zugeordneten Anlauframpe (40) zusammenwirkt.

4. Faltverdeck nach Anspruch 3, **dadurch gekennzeichnet, daß** der Anlaufkeil (39) am Hauptspriegel (20) vorgesehen ist.

5. Faltverdeckt nach Anspruch 4, **dadurch gekennzeichnet, daß** der Anlaufkeil (39) ein abgewinkeltes Trägerblech (41) umfaßt, dessen einer, nicht umhüllter Schenkel (42) mittels Schrauben (43) am Hauptspriegel (20) festlegbar ist und dessen anderer mit einer Umhüllung (44) versehener Schenkel (45) mit der Anlauframpe (40) zusammenwirkt.

6. Faltverdeck nach Anspruch 3, **dadurch gekennzeichnet, daß** die Anlauframpe (40) am vorgelagerten Lenker (18) vorgesehen ist.

7. Faltverdeck nach Anspruch 6, **dadurch gekennzeichnet, daß** die Anlauframpe (40) an einem hintenliegenden Lenker (18) einer aus zwei Lenkern (17, 18) gebildeten Viergelenkanordnung vorgesehen ist, die einen formsteifen vorderen Verdeckabschnitt (15) des Verdeckgestells (12) trägt.

8. Faltverdeck nach Anspruch 6 oder 7, **dadurch gekennzeichnet, daß** die Anlauframpe (40) an einem lediglich örtlich am hinteren Lenker (18) vorgesehenen Dachrahmenabschnitt (25) ausgebildet ist.

9. Faltverdeck nach einem der Ansprüche 3-8 **dadurch gekennzeichnet, daß** die Anlauframpe (40) - in der Seitenansicht gesehen - in einem oberen Bereich des Dachrahmenabschnitts (25) ausgebildet ist und sich aus einer bogenförmigen Führungsbahn (46) und einer daran anschließenden schrägverlaufenden Stützwand (47) zusammensetzt, wobei in Schließstellung (A) des Faltverdecks (3) an der Innenseite der Stützwand (47) eine korrespondierende Abstützfläche (50) des Anlaufkeils (39) anliegt und somit eine X-, Y- und Z-Fixierung zwischen Hauptspriegel (20) und hinterem Lenker (18) vorliegt.

10. Faltverdeck nach einem der Ansprüche 3-9, **dadurch gekennzeichnet, daß** Anlaufkeil (39) und Anlauframpe (40) von einer Schließstellung (A) des Faltverdecks (3) etwa bis zu einer vertikalen Umkehrstellung (C) des Hauptspriegels (20) zusammenwirken, und daß danach die Gewichtskräfte des Eckspriegels (22) und des Spannbügels (21), die über Spanngurte (27) mit dem Hauptspriegel (20) verbunden sind, diesen nach hinten ziehen.

11. Faltverdeck nach einem der Ansprüche 3-10, **dadurch gekennzeichnet, daß** sich der am Hauptspriegel (20) angebrachte Anlaufkeil (39) in Schließstellung (A) des Faltverdecks (3) zudem an der Außenseite des innenliegenden, vorderen Lenkers (17) abstützt.

12. Faltverdeck nach einem der Ansprüche 3-11, **dadurch gekennzeichnet, daß** die Führungsbahn (46) die Oberseite einer etwa U-förmigen Anformung (48) der Anlauframpe (40) bildet und daß unterhalb der Führungsbahn (46) und in dessen Fortsetzung nach unten eine Kabelführung vorgesehen ist.

13. Faltverdeck nach einem der Ansprüche 3-12, **dadurch gekennzeichnet, daß** etwa von der Schließstellung (A) des Faltverdecks (3) bis zum Erreichen einer senkrechten Umkehrstellung (C) des Hauptspriegels (20) ein Formschluß zwischen Anlauframpe (40) und Anlaufkeil (39) gegeben ist.

## Claims

1. A folding top (3) for a vehicle, in particular a passenger vehicle, comprising a folding-top frame (12) pivotably mounted on folding-top bearings (19) on the bodywork, and a folding-top cover (13), wherein the folding-top frame comprises a main hoop (20) and at least one connecting rod (17, 18) connecting a front folding-top portion to the folding-top bearing (19), **characterised in that** at least one adjusting device (38), which is effective during opening of the folding top (3), is provided between the main hoop (20), which is simply material-controlled, and the premounted connecting rod (18), a defined positive connection being produced between the main hoop (20) and the connecting rod (18) by means of the adjusting device (38) in the closed position (A) of the folding top (3).

2. A folding top according to claim 1, **characterised in that** an adjusting device (38) is provided on each of the two longitudinal sides (16) of the folding-top frame (12).

3. A folding top according to claims 1 and 2, **characterised in that** each adjusting device (38) comprises a starting wedge (39) which co-operates with an associated starting ramp (40) during the opening and closing process of the folding top (3).

4. A folding top according to claim 3, **characterised in that** the starting wedge (39) is provided on the main hoop (20).

5. A folding top according to claim 4, **characterised in that** the starting wedge (39) comprises a bent supporting plate (41), of which one, non-sheathed arm (42) is fixable to the main hoop (20) by means of screws (43), and the other arm (45), provided with sheathing (44), co-operates with the starting ramp (40).

6. A folding top according to claim 3, **characterised in that** the starting ramp (40) is provided on the premounted connecting rod (18).

7. A folding top according to claim 6, **characterised in that** the starting ramp (40) is provided on a rear connecting rod (18) of a four-bar arrangement formed from two connecting rods (17, 18) and carrying a rigid front folding-top portion (15) of the folding-top frame (12).

8. A folding top according to claim 6 or 7, **characterised in that** the starting ramp (40) is formed on a roof frame portion (25) only provided locally on the rear connecting rod (18).

9. A folding top according to any one of claims 3 - 8, **characterised in that** the starting ramp (40) - when seen in side view - is formed in an upper region of the roof frame portion (25) and comprises a curved guide path (46) and an adjoining, obliquely extending supporting wall (47), wherein a corresponding supporting surface (50) of the starting wedge (39) rests against the inside of the supporting wall (47) in the closed position (A) of the folding top (3) and, consequently, an X, Y and Z fixing is present between the main hoop (20) and the rear connecting rod (18).

10. A folding top according to any one of claims 3 - 9, **characterised in that** the starting wedge (39) and the starting ramp (40) co-operate from a closed position (A) of the folding top (3) substantially as far as a vertical reversal position (C) of the main hoop (20), and **in that** subsequently the weight forces of the comer hoop (22) and the clamping bow (21), which are connected to the main hoop (20) by clamping straps (27), pull the main hoop (20) rearwards.

11. A folding top according to any one of claims 3 - 10, **characterised in that** the starting wedge (39) provided on the main hoop (20) is also supported against the outside of the inner front connecting rod (17) in the closed position (A) of the folding top (3).

12. A folding top according to any one of claims 3 - 11, **characterised in that** the guide path (46) forms the upper side of a substantially U-shaped formation (48) of the starting ramp (40) and **in that** a cable guide is provided underneath the guide path (46) as a downwards continuation thereof.

13. A folding top according to any one of claims 3 - 12, **characterised in that** there is a positive connection between the starting ramp (40) and the starting wedge (39) substantially from the closed position (A) of the folding top (3) as far as a vertical reversal position (C) of the main hoop (20).

## Revendications

1. Capote pliante (3) pour un véhicule, en particulier une voiture de tourisme, comportant une structure de capote (12) montée pivotante sur des paliers de capote (19) côté carrosserie, ainsi qu'un revêtement de capote (13), la structure de capote comprenant un arceau principal (20) et au moins un bras articulé (17, 18) reliant un tronçon avant de la capote au palier de capote (19), **caractérisée en ce qu'**il est prévu, entre l'arceau principal (20) commandé uniquement par l'étoffe et le bras articulé (18) situé devant, au moins un dispositif de réglage (38) agissant à l'ouverture de la capote pliante (3), le dispositif de réglage (38) opérant une liaison définie par complémentarité de forme entre l'arceau principal (20) et le bras oscillant (18), en position de fermeture (A) de la capote pliante (3).

2. Capote pliante selon la revendication 1, **caractérisée en ce qu'**il est prévu un dispositif de réglage (38) sur chacun des deux côtés longitudinaux (16) de la structure (12) de la capote.

3. Capote pliante selon les revendications 1 et 2, **caractérisée en ce que** chaque dispositif de réglage (38) comprend un coin de butée (39) qui, à l'ouverture et à la fermeture de la capote pliante (3), coopère avec une rampe de butée (40) associée.

4. Capote pliante selon la revendication 3, **caractérisée en ce que** le coin de butée (39) est prévu sur l'arceau principal (20).

5. Capote pliante selon la revendication 4, **caractérisée en ce que** le coin de butée (39) comprend une tôle de support (41) coudée dont une branche (42) non gainée peut être fixée au moyen de vis (43) sur l'arceau principal (20) et dont l'autre branche (45), pourvue d'un gainage (44), coopère avec la rampe de butée (40).

6. Capote pliante selon la revendication 3, **caractérisée en ce que** la rampe de butée (40) est prévue sur le bras oscillant (18) placé devant.

7. Capote pliante selon la revendication 6, **caractérisée en ce que** la rampe de butée (40) est prévue sur un bras oscillant (18) situé derrière un quadrilatère articulé formé de deux bras articulés (17, 18), lequel quadrilatère articulé porte un tronçon de capote avant (15) rigide de la structure (12) de la capote.

8. Capote pliante selon la revendication 6 ou 7, **caractérisée en ce que** la rampe de butée (40) est réalisée sur un tronçon de cadre de toit (25) prévu uniquement localement sur le bras oscillant arrière (18).

9. Capote pliante selon l'une des revendications 3 à 8, **caractérisée en ce que** la rampe de butée (40) - vue de côté - est réalisée dans une zone supérieure du tronçon de cadre de toit (25) et se compose d'une voie de guidage (46) en arc et d'une paroi d'appui (47) oblique se raccordant à celle-ci, une surface d'appui (45) correspondante du cône de butée (39) s'appliquant, en position de fermeture (A) de la capote pliante (3), contre la face intérieure de la paroi d'appui (47), et une fixation (X, Y et Z) étant ainsi réalisée entre l'arceau principal (20) et le bras oscillant arrière (18).

10. Capote pliante selon l'une des revendications 3 à 9, **caractérisée en ce que** le cône de butée (39) et la rampe de butée (40) coopèrent depuis une position de fermeture (A) de la capote pliante (3) approximativement jusqu'à une position verticale d'inversion (C) de l'arceau principal (20), et **en ce qu'**ensuite les forces de poids de l'arceau d'angle (22) et de l'étrier de serrage (21), qui sont reliés par des sangles de serrage (27) à l'arceau principal (20), tirent celui-ci vers l'arrière.

11. Capote pliante selon l'une des revendications 3 à 10, **caractérisée en ce qu'**en position de fermeture (A) de la capote pliante (3), le cône de butée (39) placé sur l'arceau principal (20) prend appui en outre contre la face extérieure du bras oscillant avant (17) situé à l'intérieur.

12. Capote pliante selon l'une des revendications 3 à 11, **caractérisée en ce que** la voie de guidage (46) forme la face supérieure d'un bossage (48) approximativement en U de la rampe de butée (40) et **en ce qu'**au-dessous de la voie de guidage (46) et dans son prolongement vers le bas, il est prévu un passage de câble.

13. Capote pliante selon l'une des revendications 3 à 12, **caractérisée en ce qu'**il existe une liaison par complémentarité de forme entre la rampe de butée (40) et le coin de butée (39) approximativement depuis la position de fermeture (A) de la capote pliante (3) jusqu'à ce que soit atteinte une position d'inversion verticale (C) de l'arceau principal (20).
